# EUROPEAN PATENT APPLICATION

(11) **EP 4 645 279 A1**
(43) Date of publication of application: **05.11.2025**
(21) Application number: 23911599.1
(22) Date of filing: 06.12.2023
(51) Int. Cl.: G08G 1/09

(54) **VEHICULAR INFORMATION PROCESSING SYSTEM AND ELECTRONIC CONTROL DEVICE**

(30) Priority: 28.12.2022 JP 2022211082
(71) Applicant: DENSO CORPORATION, Kariya-city, Aichi-pref., 448-8661 (JP)
(72) Inventor: SHIMIZU, Takashi, Kariya-city, Aichi-pref., 448-8661 (JP)
(74) Representative: Winter, Brandl - Partnerschaft mbB
(86) International application number: PCT/JP2023/043669
(87) International publication number: WO 2024/142818

(57) **Abstract**

A vehicle information processing system (21) includes an electronic control unit (9), an exterior camera (16) that images the outside of a vehicle, and an interior camera (17, 18) that images the inside of the vehicle. The electronic control unit includes a cellular communication device (22), short-range wireless communication device (23, 24), a positioning device (25), an impact detection sensor (26), an antenna array (19, 27), a vehicle connector (28), a camera connector (29-31), an antenna connector (32), and an expansion connector (33). An application corresponding to a service is executed in cooperation with the resources.

## Description

### CROSS REFERENCE TO RELATED APPLICATION

The present application claims the benefit of priority from Japanese Patent Application No. 2022-211082 filed on December 28, 2022. The entire disclosures of all of the above applications are incorporated herein by reference.

### TECHNICAL FIELD

The present disclosure relates to a vehicle information processing system and an electronic control unit.

### BACKGROUND ART

For example, Patent Literature 1 discloses a configuration in which an electronic control unit mounted on a vehicle communicates with a service providing server to provide services to users such as drivers.

### PRIOR ART LITERATURE

### PATENT LITERATURE

Patent Literature 1: JP 2018-060520 A

### SUMMARY OF INVENTION

The provision of services to users is realized by the electronic control unit executing applications corresponding to the services. In a configuration where the electronic control unit individually executes applications corresponding to the services, the number of electronic control units required increases as the number of services the user wishes to receive increases. However, as the number of electronic control units increases, there are difficulties such as the need for a large installation space and increased costs. Additionally, the installation of numerous electronic control units in the vehicle leads to an increase in vehicle weight, resulting in deteriorated fuel efficiency and reduced driving range.

It is an object of the present disclosure to appropriately provide a wide variety of services to users while suppressing increases in installation space, costs, and deterioration of fuel efficiency and driving range.

According to one aspect of the present disclosure, a vehicle information processing system is connected to an in-vehicle network and capable of communicating with a management server that manages vehicle data via a communication network and has a function of transmitting the vehicle data to the management server and a function of receiving a processing request for an application from the management server and executing an application corresponding to the processing request. The vehicle information processing system includes an electronic control unit; an exterior camera capturing exterior of the vehicle, and; an interior camera capturing interior of the vehicle, as resources providing a service.

The electronic control unit includes a cellular communication device performing cellular communication with the management server, a short-range wireless communication device performing short-range wireless communication with a portable information terminal, a positioning device performing positioning of a vehicle position, an impact detection sensor detecting impact applied to the vehicle, an antenna array including an antenna for cellular communication, an antenna for short-range wireless communication, and an antenna for positioning, a vehicle connector connectable to a transmission cable transmitting vehicle battery power, a power signal, and a vehicle signal, a camera connector connectable to a transmission cable transmitting power to the exterior camera and the interior camera and transmitting a video signal including an image captured by the exterior camera and the interior camera, an antenna connector connectable to a transmission cable of an external antenna, and an expansion connector connectable to a transmission cable transmitting a data signal between an expansion device contributing to functional expansion. The electronic control unit executes the application corresponding to the service in cooperation with the resources.

By providing the electronic control unit, the exterior camera, and the interior camera as resources, and equipping the electronic control unit with a cellular communication device, a short-range wireless communication device, a positioning device, an impact detection sensor, an antenna array, a vehicle connector, a camera connector, an antenna connector, and an expansion connector, these resources cooperate to execute applications corresponding to services. By consolidating common resources required for executing a wide variety of applications into a single electronic control unit, it is possible to execute applications corresponding to a wide variety of services with a single electronic control unit, thereby reducing the number of electronic control units required to provide a wide variety of services. This allows for the appropriate provision of a wide variety of services to users while suppressing increases in installation space, costs, and deterioration of fuel efficiency and driving range.

According to one aspect of the present disclosure, an electronic control unit is provided as a resource providing a service together with an exterior camera capturing exterior of a vehicle and an interior camera capturing interior of the vehicle in a vehicle information processing system that is connected to an in-vehicle network and capable of communicating with a management server that manages vehicle data via a communication network, having a function of transmitting the vehicle data to the management server and a function of receiving a processing request for an application from the management server and executing an application corresponding to the processing request.

The electronic control unit includes a cellular communication device performing cellular communication with the management server, a short-range wireless communication device performing short-range wireless communication with a portable information terminal, a positioning device performing positioning of a vehicle position, an impact detection sensor detecting impact applied to the vehicle, an antenna array including an antenna for cellular communication, an antenna for short-range wireless communication, and an antenna for positioning, a vehicle connector connectable to a transmission cable transmitting vehicle battery power, a power signal, and a vehicle signal, a camera connector connectable to a transmission cable transmitting power to the exterior camera and the interior camera and transmitting a video signal including an image captured by the exterior camera and the interior camera, an antenna connector connectable to a transmission cable of an external antenna, and an expansion connector connectable to a transmission cable transmitting a data signal between an expansion device contributing to functional expansion. The electronic control unit executes an application corresponding to a service in cooperation with the exterior camera and the interior camera.

### BRIEF DESCRIPTION OF DRAWINGS

The above and other objects, features and advantages of the present disclosure will become more apparent from the following detailed description made with reference to the accompanying drawings. In the drawings:
FIG. 1 is a functional block diagram showing the overall configuration of one embodiment;
FIG. 2 is a functional block diagram of the management server;
FIG. 3 is a functional block diagram of the vehicle information processing system;
FIG. 4 is a diagram explaining the connection terminals of the vehicle connector;
FIG. 5 is a diagram explaining the default resources;
FIG. 6 is a diagram explaining the optional resources;
FIG. 7 is an external perspective view of the electronic control unit;
FIG. 8 is a plan view, rear view, and side view of the electronic control unit;
FIG. 9 is an exploded perspective view of the electronic control unit;
FIG. 10 is a diagram explaining the arrangement of resources in the vehicle;
FIG. 11 is a diagram showing an embodiment where the electronic control unit is arranged under the seat;
FIG. 12 is a diagram showing an embodiment where the electronic control unit is arranged in the trunk;
FIG. 13 is a diagram showing an embodiment where the exterior camera and the interior camera are arranged;
FIG. 14 is a diagram showing an embodiment where the interior camera is arranged;
FIG. 15 is a diagram showing an embodiment where the interior camera is arranged;
FIG. 16 is a diagram showing an embodiment where the external antenna array is arranged;
FIG. 17 is a diagram showing the relationship between the default resources and the applications; and
FIG. 18 is a diagram showing the relationship between the optional resources and the applications.

### DESCRIPTION OF EMBODIMENTS

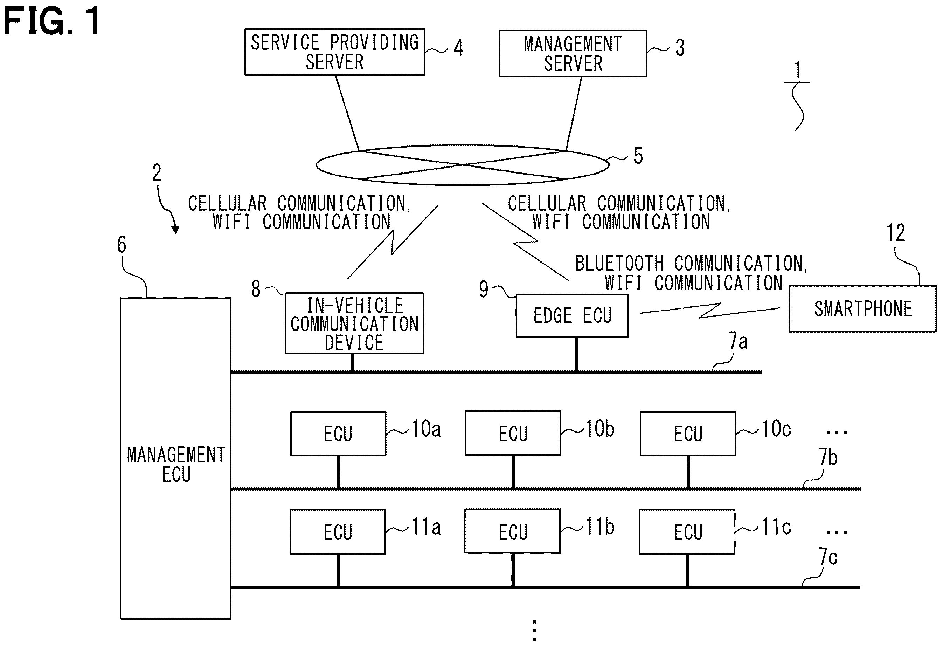

Hereinafter, an embodiment will be described with reference to the drawings. As shown in FIG. 1, the mobility IoT (Internet of Things) system 1 is configured to enable communication between a vehicle-side system 2 mounted on a vehicle, a management server 3, and a service providing server 4 via a communication network 5. The vehicle-side system 2 is equipped with an in-vehicle network, such as a CAN (Controller Area Network) (registered trademark), which connects numerous nodes mounted on the vehicle. The management ECU 6 connects multiple CAN buses 7. In this embodiment, a configuration connecting three CAN buses 7a to 7c is illustrated, but the number of CAN buses is arbitrary. The management ECU 6 has a function of relaying frames on the CAN bus 7.

The CAN bus 7a connects an in-vehicle communication device 8 and an edge ECU 9 (corresponding to an electronic control unit). The CAN bus 7b connects multiple ECUs 10a to 10c. The CAN bus 7c connects multiple ECUs 11a to 11c. The ECUs 10a to 10c and 11a to 11c are each aggregated and connected to the respective CAN buses by domain. The ECUs 10a to 10c connected to the CAN bus 7b are, for example, ECUs that control the drive system. The ECUs 11a to 11c connected to the CAN bus 7c are, for example, ECUs that control the ADAS (Advanced Driver Assistance System) system. Although not shown in FIG. 1, other domains, such as ECUs that control the powertrain system and ECUs that control the chassis system, are also aggregated and connected to the respective CAN bus. The edge ECU 9 may be directly connected only to the management ECU 6. The edge ECU 9 may be integrated with the management ECU 6, i.e., the functions of the edge ECU 9 may be included in the management ECU 6.

In this embodiment, CAN is exemplified as the in-vehicle network, but Ethernet (registered trademark), FlexRay (registered trademark), CXPI (Clock Extension Peripheral Interface) (registered trademark) and other networks, or combinations thereof, may also be used. Some of the ECUs 10a to 10c and 11a to 11c are connected to sensors and actuators according to their functions, operate based on detection signals input from the sensors, and output drive signals to drive the actuators.

The in-vehicle communication device 8 is configured by a DCM (Data Communication Module) and performs communication control with the communication network 5, conducting cellular communication and WiFi (Wireless Fidelity) (registered trademark) communication with the management server 3. The edge ECU 9 is configured to be detachable from the CAN bus 7a, as will be described in detail later. That is, the edge ECU 9 can be connected to the CAN bus 7a even after the vehicle has been distributed in the market, allowing for so-called retrofitting. The edge ECU 9 performs communication control with the communication network 5 while connected to the CAN bus 7a, conducting cellular communication and WiFi communication with the management server 3.

The vehicle-side system 2 performs cellular communication and WiFi communication with the management server 3 by the in-vehicle communication device 8 when the edge ECU 9 is not connected to the CAN bus 7a, and by both the in-vehicle communication device 8 and the edge ECU 9 when the edge ECU 9 is connected to the CAN bus 7a. The edge ECU 9 also performs Bluetooth (registered trademark) communication and WiFi communication with a smartphone 12 (corresponding to a portable information terminal) that can be carried by a user such as a driver.

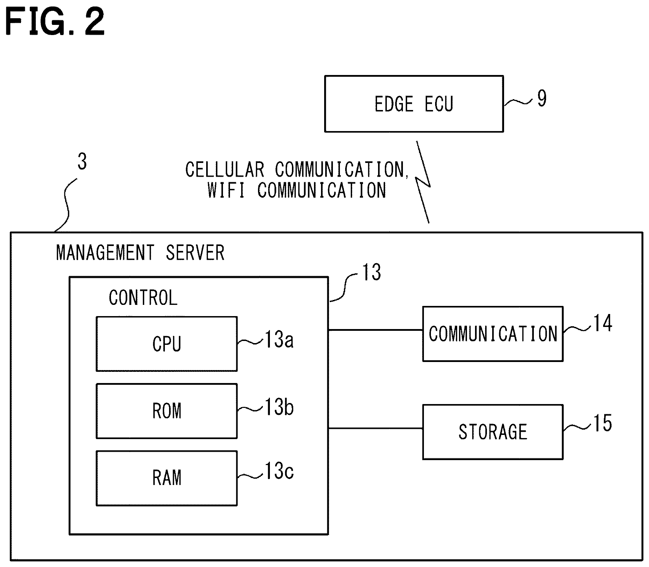

The management server 3 will be described. As shown in FIG. 2, the management server 3 includes a control unit 13, a communication unit 14, and a storage unit 15. The control unit 13 is mainly composed of a microcomputer (hereinafter referred to as a microcontroller) having a CPU 13a, ROM 13b, RAM 13c, etc. The control unit 13 executes software processing by executing a computer program stored in a non-transitory tangible storage medium with the CPU 13a, and performs hardware processing by dedicated electronic circuits, controlling the operation of the management server 3. The number of microcontrollers constituting the control unit 13 may be one or multiple. The communication unit 14 performs communication control with the communication network 5 and communicates with the in-vehicle communication device 8, the edge ECU 9, and the service providing server 4 through the communication network 5. The storage unit 15 stores various data and stores vehicle data collected from the vehicle-side system 2.

The service providing server 4 manages the services provided to the vehicle-side system 2. When the service providing server 4 receives vehicle data collected from the vehicle-side system 2 from the management server 3, it provides services, such as managing vehicle operations, based on the received vehicle data.

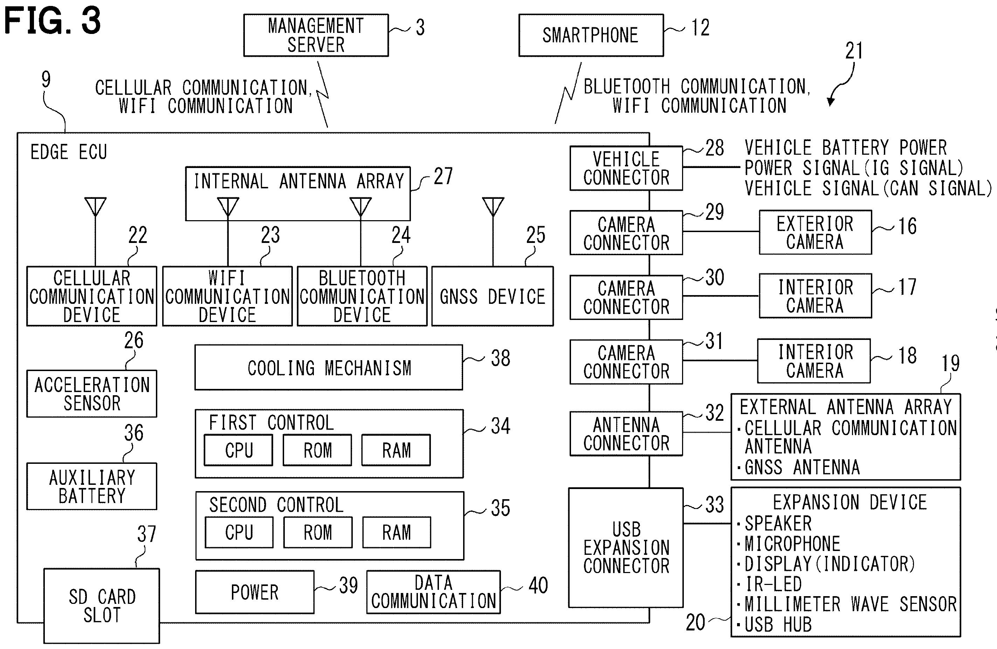

The edge ECU 9 will be described. As shown in FIG. 3, the edge ECU 9 is configured to be connectable to an exterior camera 16, interior cameras 17 and 18, an external antenna array 19, and an expansion device 20. The vehicle information processing system 21 is composed of the edge ECU 9, the exterior camera 16, the interior cameras 17 and 18, the external antenna array 19, and the expansion device 20. The vehicle information processing system 21 has the function of transmitting vehicle data to the management server 3 and the function of, when receiving an application processing request from the management server 3, executing the applications corresponding to the processing request.

The external antenna array 19 includes a cellular communication antenna that radiates and captures cellular communication radio waves, and a GNSS antenna that captures satellite radio waves radiated from GNSS satellites orbiting the sky. The expansion device 20 includes a speaker, a microphone, a display device (indicator), an infrared LED (hereinafter referred to as IR-LED), a millimeter wave sensor, and a USB hub. The speaker outputs sounds such as warning sounds or is used for voice calls. The microphone collects in-vehicle sounds or is used for voice calls. The display device lights up in green during camera shooting, or in red during an abnormal occurrence, notifying camera shooting or abnormal occurrence. The IR-LED ensures brightness during nighttime shooting. The millimeter wave sensor detects and identifies moving or stationary objects. The USB hub connects an expansion device.

The edge ECU 9 includes a cellular communication device 22, a WiFi communication device 23 (corresponding to a short-range wireless communication device), a Bluetooth communication device 24 (corresponding to a short-range wireless communication device), a GNSS (Global Navigation Satellite System) device 25 (corresponding to a positioning device), an acceleration sensor 26 (corresponding to an impact detection sensor), an internal antenna array 27, a vehicle connector 28, camera connectors 29 to 31, an antenna connector 32, a USB expansion connector 33 (corresponding to an expansion connector), a first control unit 34, a second control unit 35, an auxiliary battery 36, an SD card slot 37 (corresponding to an external storage medium connection unit), a cooling mechanism 38, a power supply unit 39, and a data communication unit 40.

The cellular communication device 22 performs cellular communication with the management server 3. The WiFi communication device 23 performs WiFi communication with the management server 3 and the smartphone 12. The Bluetooth communication device 24 performs Bluetooth communication with the smartphone. The GNSS device 25 acquires various parameters from satellite radio waves captured by the GNSS antenna, calculates the acquired parameters, and performs positioning of the vehicle position.

The acceleration sensor 26 detects impacts applied to the vehicle. The internal antenna array 27 includes a WiFi communication antenna that radiates and captures WiFi communication radio waves and a Bluetooth communication antenna that radiates and captures Bluetooth communication radio waves.

The vehicle connector 28 is detachable for power cables, power signal cables, vehicle signal cables, etc., and inputs vehicle battery power via the power cable, inputs power signals via the power signal cable, and inputs vehicle signals via the vehicle signal cable. The power signals are ignition (IG) signals or accessory (ACC) signals. The vehicle signals are CAN signals conforming to the CAN communication standard.

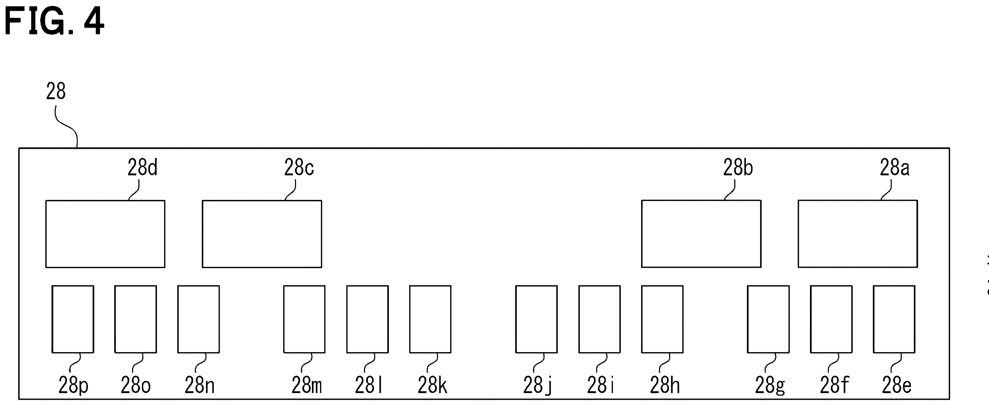

As shown in FIG. 4, the vehicle connector 28 is configured with four connection terminals from the first connection terminal 28a to the fourth connection terminal 28d arranged in the upper row, and twelve connection terminals from the fifth connection terminal 28e to the sixteenth connection terminal 28p arranged in the lower row. The connection destinations of these connection terminals 28a to 28p include the vehicle battery, power switch, ground, IR devices, and CAN bus 7a, etc. That is, vehicle battery power supplied from the vehicle battery, power signals output from the power switch, IR signals corresponding to IR devices, CAN signals conforming to the CAN communication standard, etc., are input and output.

The camera connector 29 is detachable for a transmission cable connecting the exterior camera 16. The camera connector 29 outputs power to the exterior camera 16 and inputs video signals including images captured by the exterior camera 16 when connected via the transmission cable. The camera connector 30 is detachable for a transmission cable connecting the interior camera 17. The camera connector 30 outputs power to the interior camera 17 and inputs video signals including images captured by the interior camera 17 when connected via the transmission cable. The camera connector 31 is detachable for a transmission cable connecting the interior camera 18. The camera connector 31 outputs power to the interior camera 18 and inputs video signals including images captured by the interior camera 18 when connected via the transmission cable. In this embodiment, the exterior camera 16 is connected to the camera connector 29, and the interior cameras 17 and 18 are connected to the camera connectors 30 and 31, respectively. However, the cameras connected to the camera connectors 29 to 31 may be either exterior cameras or interior cameras, and the combination of the camera connectors 29 to 31 with the exterior camera or interior camera is arbitrary.

The antenna connector 32 is detachable for a transmission cable connecting the external antenna array 19. The antenna connector 32 inputs and outputs antenna signals to and from the external antenna array 19 when connected via the transmission cable.

The USB expansion connector 33 is detachable for various transmission cables connecting the expansion device 20. The USB expansion connector 33 inputs and outputs USB signals conforming to the USB communication standard to and from the expansion device 20 when connected via the various transmission cables.

The first control unit 34 is mainly composed of a microcontroller having a CPU, ROM, and RAM. The first control unit 34 mainly executes vehicle control applications using a real-time operating system (hereinafter referred to as RTOS). The second control unit 35 is mainly composed of a microcontroller having a CPU, ROM, and RAM. The second control unit 35 mainly executes applications related to services provided by the service providing server 4 using a general-purpose operating system (hereinafter referred to as GPOS).

The auxiliary battery 36 supplies power to the edge ECU 9 while parked. By supplying power to the edge ECU 9 from the auxiliary battery 36 while parked, the possibility of depleting the capacity of the vehicle battery is eliminated. The SD card slot 37 is connectable to an SD card, which is an external storage medium. Various data can be transferred from the edge ECU 9 to the SD card and stored when the SD card is connected to the SD card slot 37. The cooling mechanism 38 includes a fan and a heat sink, which will be described later, and cools the electronic components mounted on the main board, which will be described later. The power supply unit 39 controls the power supply to each resource. The data communication unit 40 controls the transmission and reception of CAN signals. The resources are devices for communication and sensing.

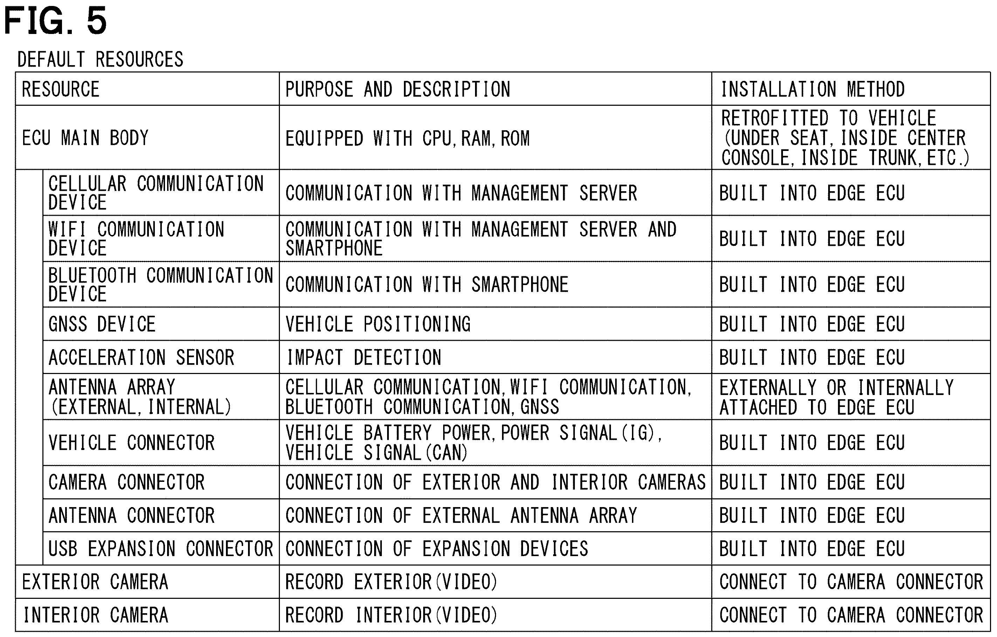

In the above configuration, the resources are classified into default resources that are essential and mounted on the vehicle information processing system 21, and optional resources that are optionally mounted on the vehicle information processing system 21. As shown in FIG. 5, the default resources include the ECU main body, the exterior camera 16, the interior cameras 17 and 18, the cellular communication device 22, the WiFi communication device 23, the Bluetooth communication device 24, the GNSS device 25, the acceleration sensor 26, the antenna array (external antenna array 19 and internal antenna array 27), the vehicle connector 28, the camera connectors 29 to 31, the antenna connector 32, and the USB expansion connector 33. Although not shown in FIG. 5, the default resources also include the first control unit 34, the second control unit 35, the power supply unit 39, and the data communication unit 40.

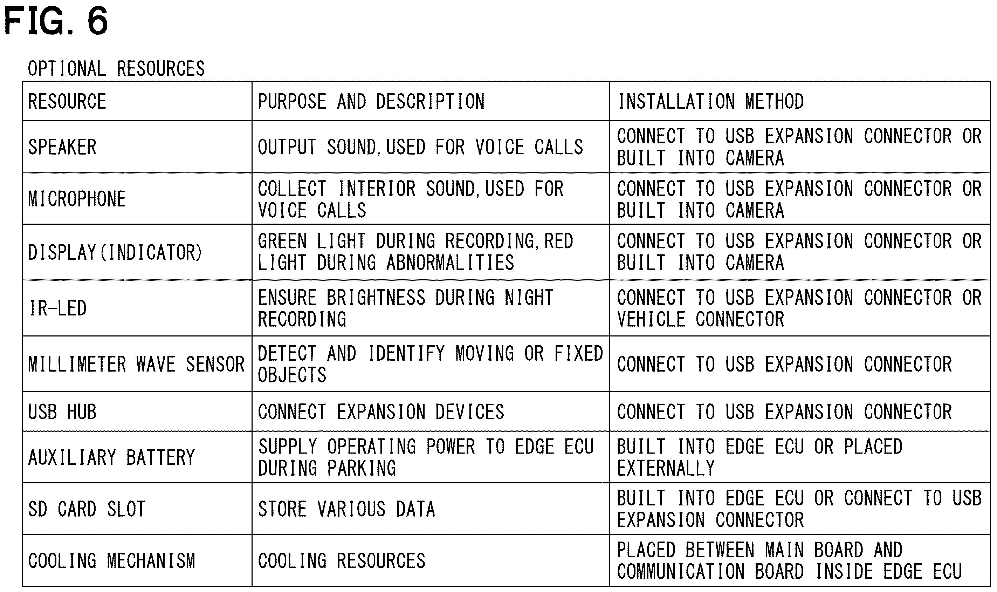

As shown in FIG. 6, the optional resources include the expansion device 20 such as the speaker and microphone, the auxiliary battery 36, the SD card slot 37, and the cooling mechanism 38. In this embodiment, a configuration in which the expansion device 20, the auxiliary battery 36, the SD card slot 37, and the cooling mechanism 38 are mounted is illustrated, but all or some of these resources may be omitted.

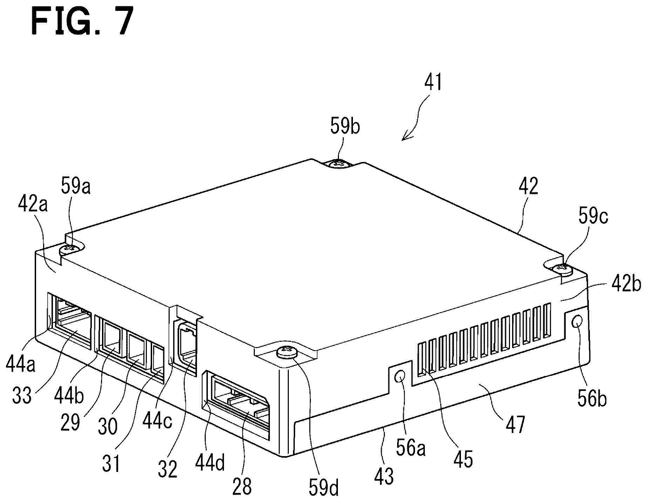

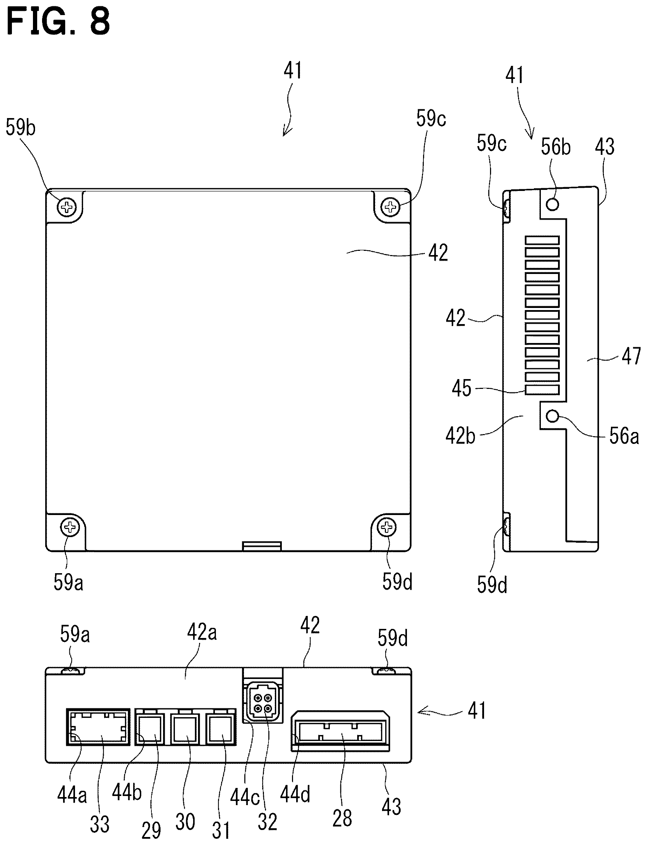

The mechanical configuration of the edge ECU 9 will be described. As shown in FIG. 7 and FIG. 8, the edge ECU 9 has a housing 41 that is generally rectangular parallelepiped in shape. The housing 41 is composed of an upper cover 42 and a lower bottom assembly 43. The cover 42 is a member that covers the main board, cooling block, and communication board from above, and is made of resin to avoid obstructing the radiation and capture of radio waves.

Connector holes 44a to 44d are formed on the rear surface 42a of the cover 42. The USB expansion connector 33 is exposed through the connector hole 44a. The camera connectors 29 to 31 are exposed through the connector hole 44b. The antenna connector 32 is exposed through the connector hole 44c. The vehicle connector 28 is exposed through the connector hole 44d. That is, the USB expansion connector 33, camera connectors 29 to 31, antenna connector 32, and vehicle connector 28 are aggregated on the rear side of the housing 41 and arranged on the same surface.

Multiple connecting holes 45 are formed on the side surface 42b of the cover 42. When the cooling fan, which is a component of the cooling mechanism 38 described later, is driven, outside air is easily drawn into the housing 41 through the connecting holes 45, and heat generated inside the housing 41 is easily discharged to the outside through the connecting holes 45, thereby cooling the electronic components arranged inside the housing 41.

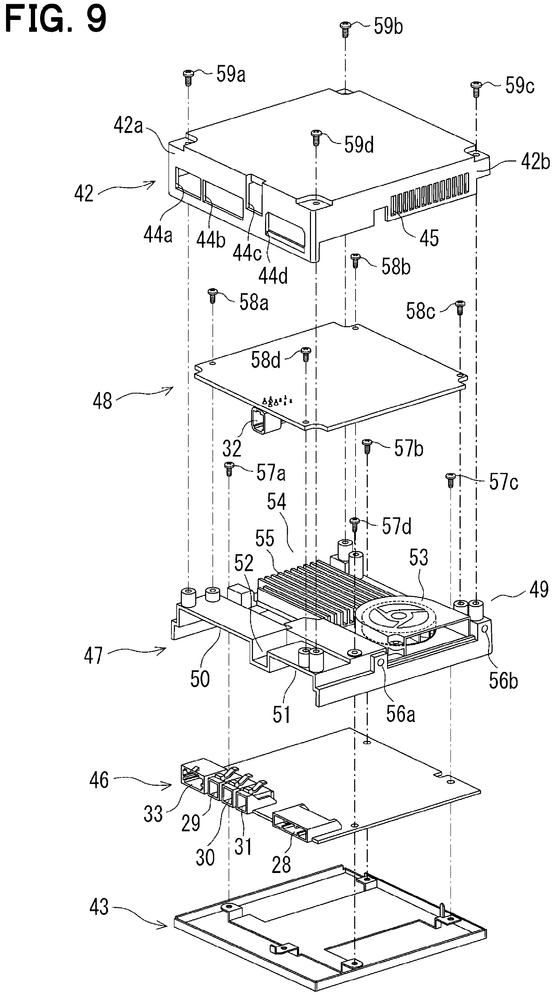

As shown in FIG. 9, the interior of the housing 41 accommodates the main board 46, the cooling block 47, and the communication board 48. The USB expansion connector 33, camera connectors 29 to 31, and vehicle connector 28 are arranged in a row at one end of the main board 46. Although not shown in FIG. 9, the main board 46 is equipped with the WiFi communication device 23, Bluetooth communication device 24, acceleration sensor 26, first control unit 34, second control unit 35, auxiliary battery 36, power supply unit 39, and data communication unit 40.

The cooling block 47 has a body 49 made of metal. The body 49 has a first housing section 50 that houses the USB expansion connector 33 and camera connectors 29 to 31 from above, a second housing section 51 that houses the vehicle connector 28 from above, and a third housing section 52 that houses the antenna connector 32 from below. The upper surface of the body 49 is equipped with a fan 53 and a heat sink 54, which are components of the cooling mechanism 38. The heat sink 54 has multiple ribs 55 along the width direction of the housing 41. The electronic components constituting the resources mounted on the main board 46 are cooled by the airflow from the fan 53. Part of the heat generated by the electronic components is transferred to the body 49, and part of the transferred heat is discharged from the ribs 55. The ribs 55 formed on the body 49 ensure a discharge area, making it easier to release heat. Screw holes 56a and 56b are formed on the side surface of the body 49 for screws (not shown) to be inserted when the edge ECU 9 is mounted on the vehicle.

The antenna connector 32 is arranged at one end of the communication board 48. Although not shown in FIG. 9, the communication board 48 is equipped with the cellular communication device 22, GNSS device 25, and internal antenna array 27. The WiFi communication antenna and Bluetooth communication antenna, which are part of the internal antenna array 27, are arranged above the metal cooling block 47, i.e., on the side where WiFi communication radio waves and Bluetooth communication radio waves arrive, and are positioned so that the radiation and capture of WiFi communication radio waves and Bluetooth communication radio waves are not obstructed by the cooling block 47. The internal antenna array 27 may also be arranged on the main board 46 in a position not covered by the cooling block 47.

In this embodiment, the cellular communication antenna and GNSS antenna are external antennas, and the WiFi communication antenna and Bluetooth communication antenna are internal antennas. However, each antenna may be either an external antenna or an internal antenna. If the cellular communication antenna and GNSS antenna are also internal antennas, they are arranged above the metal cooling block 47, i.e., on the side where cellular communication radio waves and GNSS radio waves arrive, and are positioned so that the radiation and capture of cellular communication radio waves and GNSS radio waves are not obstructed by the cooling block 47.

The cooling block 47 and the main board 46 are integrally screwed to the bottom assembly 43 with screws 57a to 57d. The communication board 48 is integrally screwed to the cooling block 47 with screws 58a to 58d. The cover 42 is integrally screwed to the cooling block 47 with screws 59a to 59d.

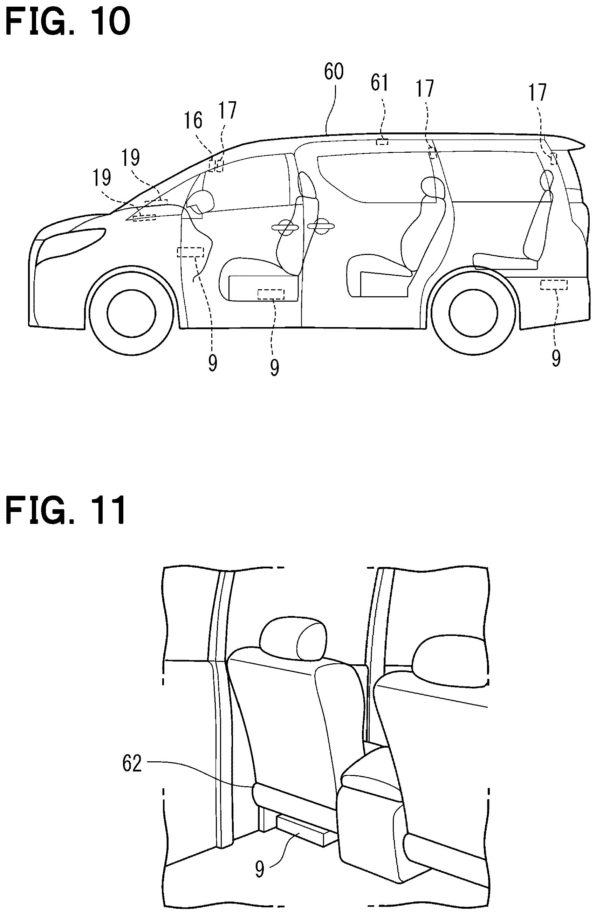

The arrangement positions of the resources will be described. As shown in FIG. 10, in a vehicle 60 with three rows of seats, for example, the edge ECU 9 is arranged under the seat, in the center console, or in the trunk. The exterior camera 16 is arranged near the rearview mirror. The interior camera 17 is arranged near the rearview mirror, at the top of the C-pillar, or at the top of the rear window. The number of exterior cameras 16 and interior cameras 17 arranged in the vehicle is arbitrary. Although the interior camera 17 is exemplified in FIG. 10, the same applies to the interior camera 18. The external antenna array 19 is arranged on the dashboard. One of the expansion device 20, the IR-LED 61, is arranged on the ceiling.

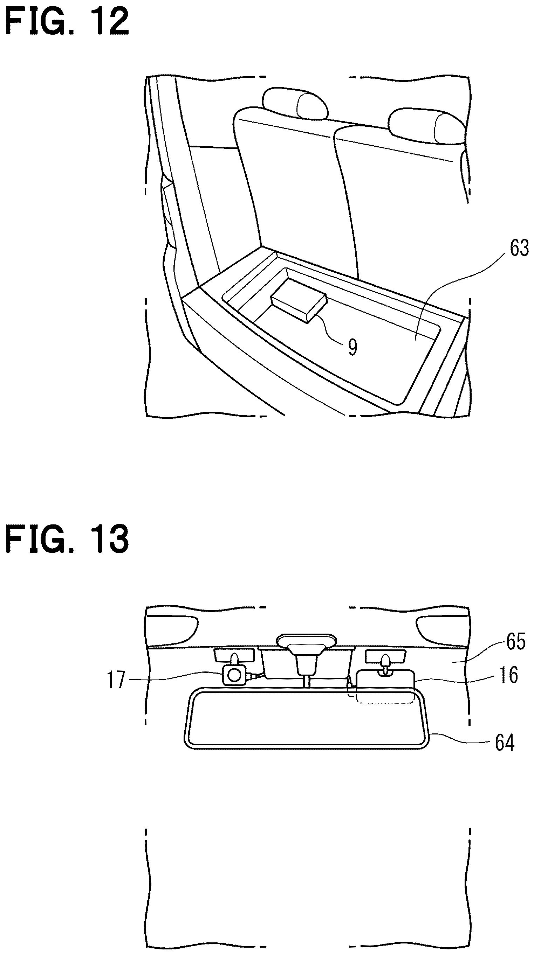

As shown in FIG. 11, the edge ECU 9 is fixedly arranged, for example, under the passenger seat 62 in the first row. As shown in FIG. 12, the edge ECU 9 is fixedly arranged, for example, in the storage space 63 in the trunk.

As shown in FIG. 13, the exterior camera 16 is fixedly arranged above the rearview mirror 64 and towards the upper side of the front window 65, with its shooting direction towards the exterior of the vehicle. The exterior camera 16 captures the front of the vehicle, including the license plates of preceding vehicles and adjacent lanes parallel to the lane in which the vehicle is traveling. The interior camera 17 is fixedly arranged above the rearview mirror 64 and towards the upper side of the front window 65, with its shooting direction towards the interior of the vehicle. When the interior camera 17 is arranged above the rearview mirror 64, it captures the driver and passengers seated in the first row, passengers seated in the second row, and the sides of the vehicle.

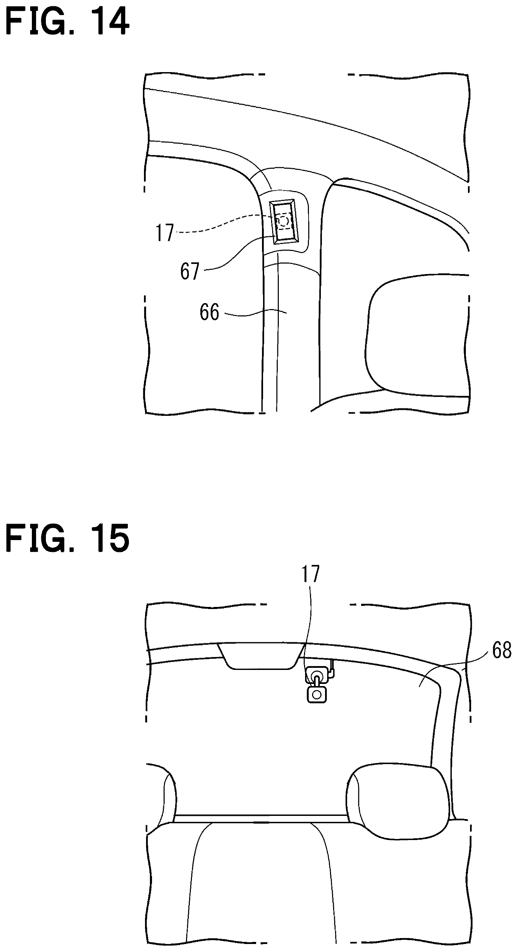

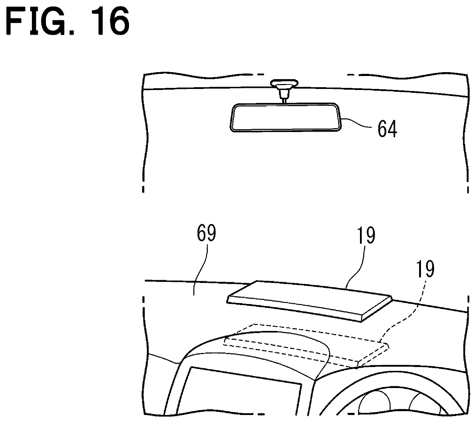

As shown in FIG. 14, the interior camera 17 is fixedly arranged at the upper part of the C-pillar 66, with its shooting direction towards the interior of the vehicle. When the interior camera 17 is arranged at the upper part of the C-pillar 66, it captures passengers seated in the second row, passengers seated in the third row, and the sides of the vehicle. FIG. 14 illustrates an embodiment where the interior camera 17 is covered by a decorative cover 67. As shown in FIG. 15, the interior camera 17 is fixedly arranged at the upper part of the rear window 68, with its shooting direction towards the interior of the vehicle. When the interior camera 17 is arranged at the upper part of the rear window 68, it captures passengers seated in the third row and infants seated rear-facing in a child seat installed in the third row. As shown in FIG. 16, the external antenna array 19 is fixedly arranged on or inside the dashboard 69. The cellular communication antenna and GNSS antenna, which are part of the external antenna array 19, are arranged separately from the edge ECU 9, in positions where the radiation and capture of cellular communication radio waves and GNSS radio waves are not obstructed by other electronic components.

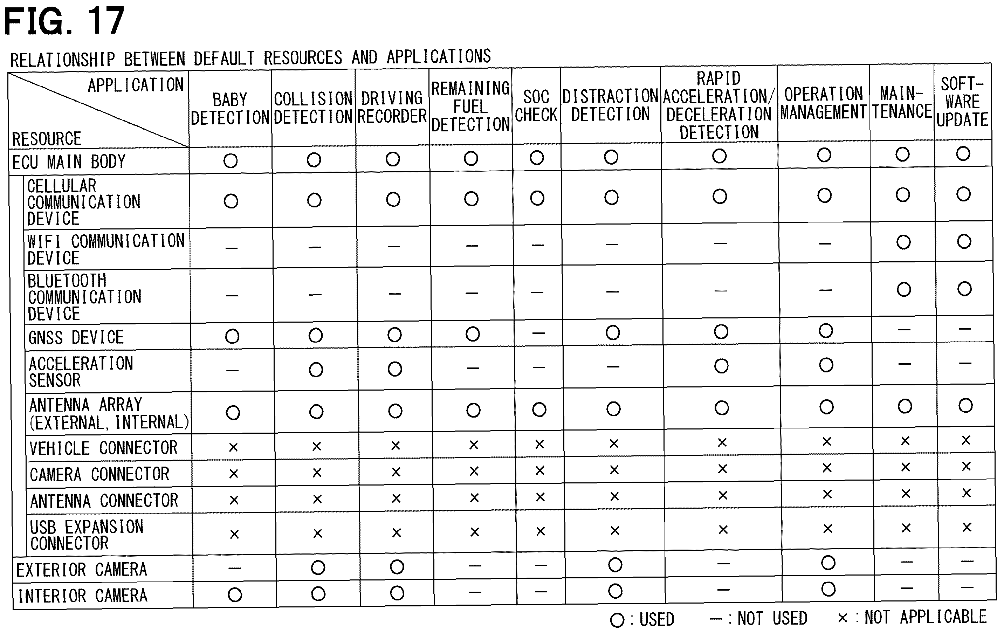

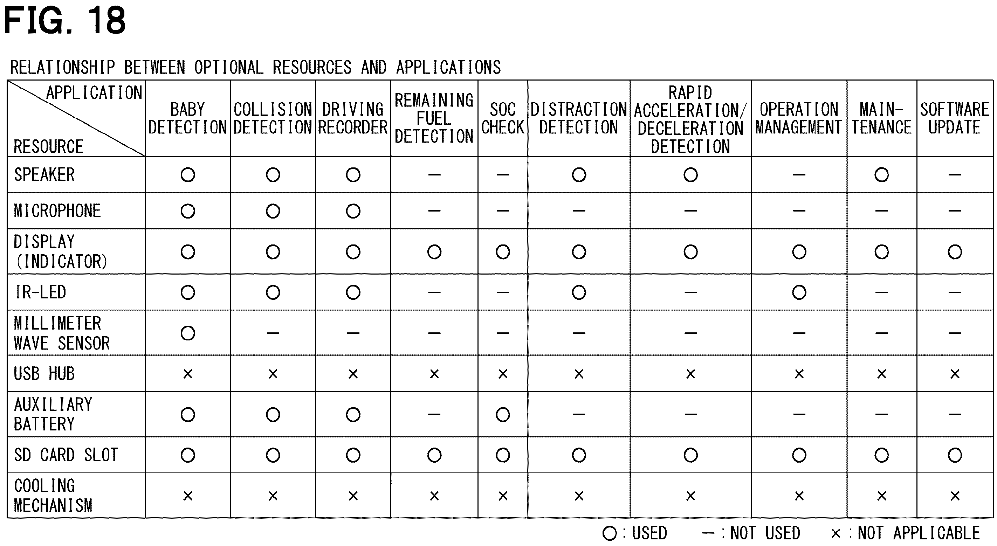

The edge ECU 9 executes applications corresponding to services in cooperation with the aforementioned resources. By executing applications in cooperation with the resources, services are provided to users such as drivers. The relationship between resources and applications will be described with reference to FIG. 17 and FIG. 18.

The "Baby Detection" application detects the presence of infants or young children left behind in the vehicle. When the vehicle is parked and the driver exits, the application detects if an infant or young child is left behind in the vehicle and alerts the driver. The edge ECU 9 executes the "Baby Detection" application in cooperation with resources such as the ECU main body, cellular communication device 22, GNSS device 25, antenna array 19, interior cameras 17 and 18, speaker, microphone, display device, IR-LED, millimeter wave sensor, auxiliary battery, and SD card slot. For example, the edge ECU 9 detects infants or young children in the vehicle using the interior cameras 16 and the millimeter wave sensor connected to the USB expansion connector 33, alerts the driver using the speaker and display device, and transmits images captured by the interior cameras 16 along with location information detected by the GNSS device 25 to the management server 3 via the cellular communication device 22 for remote viewing by devices such as the smartphone 12. The management server 3 notifies the driver or vehicle owner's smartphone 12 that an infant or young child has been left behind in the vehicle.

The "Collision Detection" application detects vehicle collisions. When an object such as another vehicle collides with the vehicle, the application notifies the vehicle owner or other relevant parties of the collision. The edge ECU 9 executes the "Collision Detection" application in cooperation with resources such as the ECU main body, cellular communication device 22, GNSS device 25, acceleration sensor 26, antenna array 19, exterior camera 16, interior cameras 17 and 18, speaker, microphone, display device, IR-LED, auxiliary battery, and SD card slot. For example, the edge ECU 9 detects vehicle collisions using the acceleration sensor 26, and transmits images captured by the exterior camera 16 and interior cameras 17 and 18 along with location information detected by the GNSS device 25 to the management server 3 via the cellular communication device 22. The management server 3 notifies the driver or vehicle owner's smartphone 12 of the detected collision. The "Collision Detection" application can also be configured to detect impacts caused by acts of vandalism while the vehicle is parked, such as vehicle theft. In this case, the edge ECU 9 and speaker can issue an alert to the actor of the vehicle vandalism.

The "Drive Recorder" application records the vehicle's state when the ignition power is on. The edge ECU 9 executes the "Drive recorder" application in cooperation with resources such as the ECU main body, cellular communication device 22, GNSS device 25, acceleration sensor 26, antenna array 19, exterior camera 16, interior cameras 17 and 18, speaker, microphone, display device, IR-LED, auxiliary battery, and SD card slot. For example, the edge ECU 9 transmits images captured by the exterior camera 16 and interior cameras 17 and 18, audio collected by the microphone, data from the acceleration sensor 26, location information detected by the GNSS device 25, and CAN data received via the vehicle connector 28 to the management server 3 via the cellular communication device 22 while driving. CAN data and other information can be transmitted to the management server 3 periodically, and image and audio data can be transmitted to the management server 3 only during specific events.

The "Remaining Fuel Detection" application detects the remaining fuel level. The edge ECU 9 executes the "Remaining Fuel Detection" application in cooperation with resources such as the ECU main body, cellular communication device 22, GNSS device 25, antenna array 19, exterior camera 16, interior cameras 17 and 18, display device, and SD card slot. For example, when the edge ECU 9 receives a request for remaining fuel detection from the management server 3, it receives CAN data related to the remaining fuel level via the vehicle connector 28, displays the information on the display device, and transmits the information to the management server 3 via the cellular communication device 22.

The "State of Charge (SoC) Check" application detects the remaining charge level. The edge ECU 9 executes the "State of Charge Check" application in cooperation with resources such as the ECU main body, cellular communication device 22, antenna array 19, display device, auxiliary battery, and SD card slot. For example, when the edge ECU 9 receives a request for a state of charge check from the management server 3, it receives CAN data related to the remaining charge level via the vehicle connector 28, displays the information on the display device, and transmits the information to the management server 3 via the cellular communication device 22.

The "Distraction Check" application detects driver distraction. The edge ECU 9 executes the "Distraction Check" application in cooperation with resources such as the ECU main body, cellular communication device 22, GNSS device 25, antenna array 19, exterior camera 16, interior cameras 17 and 18, speaker, display device, IR-LED, and SD card slot. For example, the edge ECU 9 detects driver distraction from images containing the driver's face captured by the interior cameras 17 and 18 while driving, and alerts the driver using the speaker and display device. The edge ECU 9 also transmits images captured by the exterior camera 16 and interior cameras 17 and 18, along with information about the detected distraction, to the management server 3 via the cellular communication device 22, or records the information on a storage medium inserted into the SD card slot 7.

The "Rapid Acceleration/Deceleration Detection" application detects rapid acceleration or deceleration of the vehicle. The edge ECU 9 executes the "Rapid Acceleration/Deceleration Detection" application in cooperation with resources such as the ECU main body, cellular communication device 22, GNSS device 25, acceleration sensor 26, antenna array 19, speaker, display device, and SD card slot. For example, the edge ECU 9 detects rapid acceleration or deceleration using signals detected by the acceleration sensor 26 or CAN data received via the vehicle connector 28, and alerts the driver using the speaker and display device. The edge ECU 9 also transmits images captured by the exterior camera 16 and interior cameras 17 and 18, along with information about the occurrence of rapid acceleration or deceleration, to the management server 3 via the cellular communication device 22, or records the information on a storage medium inserted into the SD card slot 7.

The "Operation Management" application manages vehicle operations. The edge ECU 9 executes the "Operation Management" application in cooperation with resources such as the ECU main body, cellular communication device 22, GNSS device 25, acceleration sensor 26, antenna array 19, exterior camera 16, interior cameras 17 and 18, display device, IR-LED, and SD card slot. For example, the edge ECU 9 periodically transmits data such as location information and timestamps detected by the GNSS device 25, data from the acceleration sensor 26, CAN data received via the vehicle connector 28, images captured by the exterior camera 16, and images captured by the interior cameras 17 and 18 to the management server 3 via the cellular communication device 22 while driving or while parked. The edge ECU 9 may also transmit data to the management server 3 when driver distraction, rapid acceleration, or rapid deceleration is detected.

The "Maintenance" application maintains the vehicle's condition. The edge ECU 9 executes the "Maintenance" application in cooperation with resources such as the ECU main body, cellular communication device 22, WiFi communication device 23, Bluetooth communication device 24, GNSS device 25, antenna array 19, speaker, display device, and SD card slot. For example, when the edge ECU 9 receives a maintenance request from the management server 3 while driving or while parked, it sends a diagnostic command to the target ECU on the CAN bus 7 via the vehicle connector 28, receives the CAN data as the diagnostic result, and transmits it to the management server 3. The diagnostic result may also be transmitted to a diagnostic tool connected via the Bluetooth communication device 24, recorded on a storage medium inserted into the SD card slot 37, or indicated by lighting or flashing the display device.

The "Software Update" application updates software. The edge ECU 9 executes the "Software Update" application in cooperation with resources such as the ECU main body, cellular communication device 22, WiFi communication device 23, Bluetooth communication device 24, GNSS device 25, antenna array 19, display device, and SD card slot. For example, the edge ECU 9 downloads the software to be updated from the management server 3 and updates or adds applications while driving or while parked. The edge ECU 9 displays the progress of the software update on the display device or on a smartphone 12 connected via the Bluetooth communication device 24. The edge ECU 9 may also transmit the software to be updated to the target ECU via the vehicle connector 28 and instruct the target ECU to update the software.

Other resources not mentioned above may also be provided, and other applications besides those mentioned above may be executed in cooperation with the illustrated resources and additional resources.

As described above, according to this embodiment, the following effects can be obtained. In the vehicle information processing system 21, resources such as the edge ECU 9, exterior camera 16, and interior cameras 17 and 18 are provided. The edge ECU 9 is equipped with a cellular communication device 22, WiFi communication device 23, Bluetooth communication device 24, GNSS device 25, acceleration sensor 26, internal antenna array 27, vehicle connector 28, camera connectors 29 to 31, antenna connector 32, and USB expansion connector 33. The resources cooperate to execute applications corresponding to services. By consolidating common resources required for executing a wide variety of applications into the edge ECU 9, it is possible to execute applications corresponding to a wide variety of services with a single edge ECU 9, thereby reducing the number of ECUs required to provide a wide variety of services. This allows for the appropriate provision of a wide variety of services to users while suppressing increases in installation space, costs, and deterioration of fuel efficiency and driving range.

As a resource, an expansion device 20 connectable to the edge ECU 9 are provided. Services using a speaker, microphone, display device, IR-LED, millimeter wave sensor, and USB hub can be appropriately provided to users.

As a resource, an auxiliary battery 36 that supplies power to the edge ECU 9 while parked is provided. By supplying power to the edge ECU 9 from the auxiliary battery 36 while parked, the depletion of the vehicle battery capacity can be appropriately avoided.

As a resource, an SD card slot 37 connectable to an SD card is provided. Various data can be transferred from the edge ECU 9 to the SD card and stored.

As a resource, a cooling mechanism 38 for cooling electronic components is provided. Heat generated by electronic components can be appropriately dissipated, and failures of the edge ECU 9 can be appropriately avoided.

The vehicle connector 28, camera connectors 29 to 31, antenna connector 32, and USB expansion connector 33 are arranged on the same surface of the housing 41. This makes it easy to perform wiring work for transmission cables connected to each connector 28.

The present disclosure has been described in accordance with the embodiments, but it is understood that the disclosure is not limited to the embodiments and structures described. The present disclosure encompasses various modifications and equivalents within the scope of the claims. Additionally, various combinations and configurations, including those with only one element, more, or fewer elements than described, are also within the scope and spirit of the present disclosure.

The present disclosure includes, in addition to the description of the claims, the following:
[1] A vehicle information processing system (21) that is connected to an in-vehicle network and capable of communicating with a management server that manages vehicle data via a communication network, having a function of transmitting the vehicle data to the management server and a function of receiving a processing request for an application from the management server and executing an application corresponding to the processing request, the vehicle information processing system comprising:
   an electronic control unit (9);
   an exterior camera (16) capturing exterior of the vehicle, and;
   an interior camera (17, 18) capturing interior of the vehicle, as resources providing a service,
   wherein
   the electronic control unit includes:
      a cellular communication device (22) performing cellular communication with the management server;
      a short-range wireless communication device (23, 24) performing short-range wireless communication with a portable information terminal;
      a positioning device (25) performing positioning of a vehicle position;
      an impact detection sensor (26) detecting impact applied to the vehicle;
      an antenna array (19, 27) including an antenna for cellular communication, an antenna for short-range wireless communication, and an antenna for positioning;
      a vehicle connector (28) connectable to a transmission cable transmitting vehicle battery power, a power signal, and a vehicle signal;
      a camera connector (29 to 31) connectable to a transmission cable transmitting power to the exterior camera and the interior camera and transmitting a video signal including an image captured by the exterior camera and the interior camera;
      an antenna connector (32) connectable to a transmission cable of an external antenna; and
      an expansion connector (33) connectable to a transmission cable transmitting a data signal between an expansion device contributing to functional expansion, and
      the resources cooperate to execute the application corresponding to the service.
[2] The vehicle information processing system according to [1], further comprising
   the expansion device (20) as the resources.
[3] The vehicle information processing system according to [1] or [2], wherein
   the application is capable of providing the service while parked,
   as the resource, the vehicle information processing system further comprises an auxiliary battery (36) supplying power to the electronic control unit while parked.
[4] The vehicle information processing system according to any one of [1] to [3], further comprising
   an external storage medium connection unit (37) connectable to an external storage medium, as the resource.
[5] The vehicle information processing system according to any one of [1] to [4], further comprising
   a cooling mechanism (38) cooling an electronic component mounted on the electronic control unit, as the resource.
[6] The vehicle information processing system according to any one of [1] to [5], wherein
   each of the connectors is arranged on same surface of a housing of the electronic control unit.
[7] The vehicle information processing system according to any one of [1] to [6], wherein
   the electronic control unit is capable of being arranged in at least one of under a vehicle seat, within a vehicle trunk, or within a vehicle center console.
[8] The vehicle information processing system according to any one of [1] to [7], wherein
   the antenna array includes an internal antenna array built into the housing,
   the internal antenna array is mounted on a communication board arranged above a main board, and
   a cover that covers the communication board and the main board from above is made of resin.

## Claims

1. A vehicle information processing system (21) that is connected to an in-vehicle network and capable of communicating with a management server that manages vehicle data via a communication network, having a function of transmitting the vehicle data to the management server and a function of receiving a processing request for an application from the management server and executing an application corresponding to the processing request, the vehicle information processing system comprising:
an electronic control unit (9);
an exterior camera (16) capturing exterior of the vehicle, and;
an interior camera (17, 18) capturing interior of the vehicle, as resources providing a service,
wherein
the electronic control unit includes:
a cellular communication device (22) performing cellular communication with the management server;
a short-range wireless communication device (23, 24) performing short-range wireless communication with a portable information terminal;
a positioning device (25) performing positioning of a vehicle position;
an impact detection sensor (26) detecting impact applied to the vehicle;
an antenna array (19, 27) including an antenna for cellular communication, an antenna for short-range wireless communication, and an antenna for positioning;
a vehicle connector (28) connectable to a transmission cable transmitting vehicle battery power, a power signal, and a vehicle signal;
a camera connector (29 to 31) connectable to a transmission cable transmitting power to the exterior camera and the interior camera and transmitting a video signal including an image captured by the exterior camera and the interior camera;
an antenna connector (32) connectable to a transmission cable of an external antenna; and
an expansion connector (33) connectable to a transmission cable transmitting a data signal between an expansion device contributing to functional expansion, and
the resources cooperate to execute the application corresponding to the service.

2. The vehicle information processing system according to claim 1, further comprising
the expansion device (20) as the resources.

3. The vehicle information processing system according to claim 1, wherein
the application is capable of providing the service while parked,
as the resource, the vehicle information processing system further comprises an auxiliary battery (36) supplying power to the electronic control unit while parked.

4. The vehicle information processing system according to claim 1, further comprising
an external storage medium connection unit (37) connectable to an external storage medium, as the resource.

5. The vehicle information processing system according to claim 1, further comprising
a cooling mechanism (38) cooling an electronic component mounted on the electronic control unit, as the resource.

6. The vehicle information processing system according to claim 1, wherein
each of the connectors is arranged on same surface of a housing of the electronic control unit.

7. The vehicle information processing system according to any one of claims 1 to 6, wherein
the electronic control unit is capable of being arranged in at least one of under a vehicle seat, within a vehicle trunk, or within a vehicle center console.

8. The vehicle information processing system according to any one of claims 1 to 6, wherein
the antenna array includes an internal antenna array built into the housing,
the internal antenna array is mounted on a communication board arranged above a main board, and
a cover that covers the communication board and the main board from above is made of resin.

9. An electronic control unit (9) provided as a resource providing a service together with an exterior camera capturing exterior of a vehicle and an interior camera capturing interior of the vehicle in a vehicle information processing system (21) that is connected to an in-vehicle network and capable of communicating with a management server that manages vehicle data via a communication network, having a function of transmitting the vehicle data to the management server and a function of receiving a processing request for an application from the management server and executing an application corresponding to the processing request, the electronic control unit comprising:
a cellular communication device (22) performing cellular communication with the management server;
a short-range wireless communication device (23, 24) performing short-range wireless communication with a portable information terminal;
a positioning device (25) performing positioning of a vehicle position;
an impact detection sensor (26) detecting impact applied to the vehicle;
an antenna array (19, 27) including an antenna for cellular communication, an antenna for short-range wireless communication, and an antenna for positioning;
a vehicle connector (28) connectable to a transmission cable transmitting vehicle battery power, a power signal, and a vehicle signal;
a camera connector (29 to 31) connectable to a transmission cable transmitting power to the exterior camera and the interior camera and transmitting a video signal including an image captured by the exterior camera and the interior camera;
an antenna connector (32) connectable to a transmission cable of an external antenna; and
an expansion connector (33) connectable to a transmission cable transmitting a data signal between an expansion device contributing to functional expansion,
wherein
the electronic control unit executes an application corresponding to a service in cooperation with the exterior camera and the interior camera.
